# EUROPEAN PATENT APPLICATION

(11) **EP 3 037 560 A1**
(43) Date of publication of application: **29.06.2016**
(21) Application number: 14425158.4
(22) Date of filing: 22.12.2014
(51) Int. Cl.: C22B 7/04

(54) **METHOD AND APPARATUS FOR THE VALORIZATION OF STEEL SLAGS**

(71) Applicant: Bevilacqua, Paolo, 34148 Trieste (TS) (IT); R.M.T. - Recupero Materiali Terni S.r.l., 05100 Terni (TR) (IT)
(72) Inventor: Bevilacqua, Paolo, 34148 Trieste TS (IT); Papa Italiani, Marco, 05100 Terni TR (IT); Sabatini, Andrea, 05100 Terni TR (IT)
(74) Representative: Spina, Alessandro

(57) **Abstract**

The invention relates to a method for the valorization of steel slags, said method comprising the steps of: i) subjecting steel slags to comminution up to a size lower than 1 mm; ii) carrying out a first wet screening of the slag subjected to comminution so as to provide oversieve materials having a size comprised between 0.250 and 1 mm; iii) separating under wet conditions a non-magnetic fraction of said oversieve materials by a magnetic fraction thereof; iv) washing said non-magnetic fraction; v) carrying out a second wet screening of said non-magnetic fraction of said non-magnetic fraction so as to provide oversieve materials having a size comprised between 0.250 and 1 mm; vi) collecting the washed and screened non-magnetic fraction of the oversieve materials in a container. The invention also relates to an apparatus for the valorization of steel slags configured to carry out said method.

## Description

The present invention generally relates to recovery and valorization of aggregates deriving from steel industry and in particular to a method and an apparatus for the valorization of steel slags.

The use of residues deriving from industrial processes that have characteristics suitable for their valorization and reuse for the manufacturing of new products and artifacts is a practice increasingly followed in Europe and in all major advanced countries of the world. This meets the need and hint to create a sustainable development model based on reducing consumption of natural resources and on minimizing production of waste.

To this aim, many of the residues that were once considered only materials to be disposed are now subjected to valorization methods, thus becoming the dignity and status of products.

If properly treated, materials deriving from steel production processes, such as blast furnace slag, converter slag, electric furnace slag, that feature suitable properties do increasingly represent a very good resource that may substitute or used complementary to products deriving from natural resources. Thanks to the development of controlled production processes based on the best available technologies and the most advanced know-how on the market, it is possible to obtain products meeting the needs of building and road constructions, i.e. materials that can partially or even completely replace traditional products.

From an environmental point of view, there are several benefits deriving from the valorization and use of steel slags: minimization of waste to be disposed, lower exploitation of natural resources and lower resort to activities impacting on the territory such as quarries for extraction of inert materials, energy saving and reduction of carbon dioxide emissions.

There are additional benefits deriving from technical features that are particularly suitable for certain applications. For example, in road construction there is an increase in the duration of road paving, as well as an increase in driving safety due to the better tire-adherence characteristics of the road surface.

Steel may be produced basically through two distinct manufacturing processes, namely an integral cycle that employs raw materials such as iron ore and coal, and an electric arc furnace cycle, wherein iron scrap is molten, thus exploiting the property of complete recyclability of steel, downstream of which different refining processes may be carried out.

In addition to the primary product, namely steel, the integral cycle and the electric arc furnace cycle produce other materials such as slags, that have different characteristics and features depending on a number of factors deriving from the raw materials that are employed, as well as from the manufacturing technologies.

The European steel industry unanimously essentially distinguishes four major families of steel slags, and in particular:
- Slags deriving from blast furnace commonly called "blast-furnace slag";
- Slags deriving from converter;
- Slags deriving from electric arc furnace, known under the acronym C-EAF (Electric Arc Furnace - Carbon steel) or under the acronym S-EAF (Electric Arc Furnace - Stainless (high alloy steel)) depending on the fact that it derives from carbon steel production or from stainless/high-alloy steel production;
- Slags deriving from secondary metallurgy.

Slags deriving from electric arc furnace, which is used in steel industry to produce steel from metal scraps, are called "steel slags". In particular, slags formed above a bath of molten steel as a result of the oxidation of the scraps and the compounds generated by the additives included in the charge of the electric furnace are called "black slags". There are also steel slags called "white slags", which are produced in the ladle furnace in the phase of refining steel.

Generally speaking, steel slags can be considered as natural effusive rocks of volcanic origin and mainly consist of ternary mixtures of calcium oxide (CaO), silicon dioxide (SiO₂) and iron oxide (FeO), and other components in smaller percentages that determine the difference between the two types of slags deriving from electric arc furnace (EAF slag and EAF-C-S slag).

The valorization of steel slags is presently the subject of great scientific interest, which stems from their assimilation to natural hard rocks and therefore from the possibility of replacing inert materials in various applications including construction and road paving. In addition to this, these materials are known to have even better properties than fine inert materials of effusive origin, such as basalt, diabase and porphyry, usually employed for the manufacturing of special asphalt.

One of the major problems related to reuse of steel slags as inert materials is the presence of small size metallic inclusions. Metallic inclusions do not allow an effective separation of inert materials from metal parts present in the slags subsequent to the treatment processes of ferrous scraps in an electric arc furnace. The presence of metallic inclusions remarkably reduces the amount of inert materials, i.e. non-metal materials, that could be collected and effectively used.

Another problem related to the valorization of steel slags is the large amount of water used to wash recovered materials in order to meet the requirements of leaching tests established by the present standards. Besides water consumption problems, water discharge at the end of a washing process has a high environmental impact.

The object of the present invention is therefore to provide a method and an apparatus for the valorization of steel slags which allow to overcome such drawbacks. This object is achieved with a method and an apparatus whose main features are specified in claims 1 and 8, respectively, while other features are specified in the remaining claims.

An idea of solution underlying the invention is to carry out valorization of steel slags by employing two consecutive treatment steps, in particular a step of comminution and particle size classification under dry conditions and a wet treatment step. The comminution step includes a plurality of crushing and subsequent screening operations that reduce the dimensions of the steel slags to a size smaller than 1 mm, which is considered a good compromise between a sufficient, though not complete, way to separate the metallic inclusions present in the slags and a reasonable cost of the valorization method.

To this aim, the apparatus includes comminution units, for example, crushers, and respective sieves arranged in series. A recirculating path of oversieve materials, i.e. slags held upon screening, towards the respective crusher may be advantageously associated to each sieve, thus allowing to increase the amount of non-magnetic materials that may be recovered from the slags.

According to an embodiment of the invention, the comminution step may advantageously include one or more steps of periodic discharging the materials that are recirculated between the sieves and the respective comminution units. This allows to eliminate metal parts, which, unlike the slags, do not undergo appreciable size reductions during crushing operations and therefore tend to circulate endlessly between sieves and respective comminution units, thus also wearing out their mechanical components.

The wet treatment step of the slags following the comminution step allows to wash the slags reduced to the desired size, so that they comply with the leaching test established by the present standards. In this step of the valorization method the slags are fed to a magnetic wet magnetic separator, where separation of magnetic fractions from non-magnetic is carried out.

The wet treatment step may be advantageously combined with a treatment of recovery, purification and recycling of process water, which offers the benefit of greatly reducing consumption of fresh water in the valorization apparatus, as well as of minimizing the environmental impact deriving from the discharge of process water into an aquifer.

Further advantages and features of the valorization method and apparatus according to the present invention will become clear to those skilled in the art from the following detailed and non-limiting description of embodiments thereof with reference to the accompanying drawings, wherein:
- Figure 1 is a block diagram schematically showing a comminution line of a valorization apparatus according to the invention;
- Figure 2 is a block diagram schematically showing a wet treatment line of the valorization apparatus according to the invention;
- Figure 3 is a block diagram schematically showing a system for the treatment of process water associated with the wet treatment line of Figure 2.

Referring to the drawings, the method for the valorization of steel slags according to the invention includes a comminution step configured to progressively reduce the size of steel slags so as to separate metallic inclusions contained therein and a subsequent wet treatment step that has the purpose of washing the slags previously subjected to comminution and to separate the metallic fraction therefrom, which cannot be used as inert material.

According to the invention, steel slags undergo comminution up to a particle size lower than 1 mm. Experimental studies have shown a remarkable presence of metallic inclusions having spherical shape and small size within individual slag pieces. These metallic inclusions provide steel slags with magnetic properties, thus making less effective the magnetic separation of larger metallic elements that are also present among the slags. A particle size lower than 1 mm is considered a good compromise between a sufficient, although not complete, separation of the metallic inclusions present in the slags and a reasonable cost of the valorization method.

The comminution step comprises a number of crushing and subsequent screening operations carried out along a comminution line of the apparatus according to the invention, which comprises a plurality of sets of comminution units, for example crushers, and sieves arranged in series. In the following, three consecutive crushing and screening steps will be described by way of example, but it will be understood that neither their number nor the intermediate comminution sizes are limiting features of the invention.

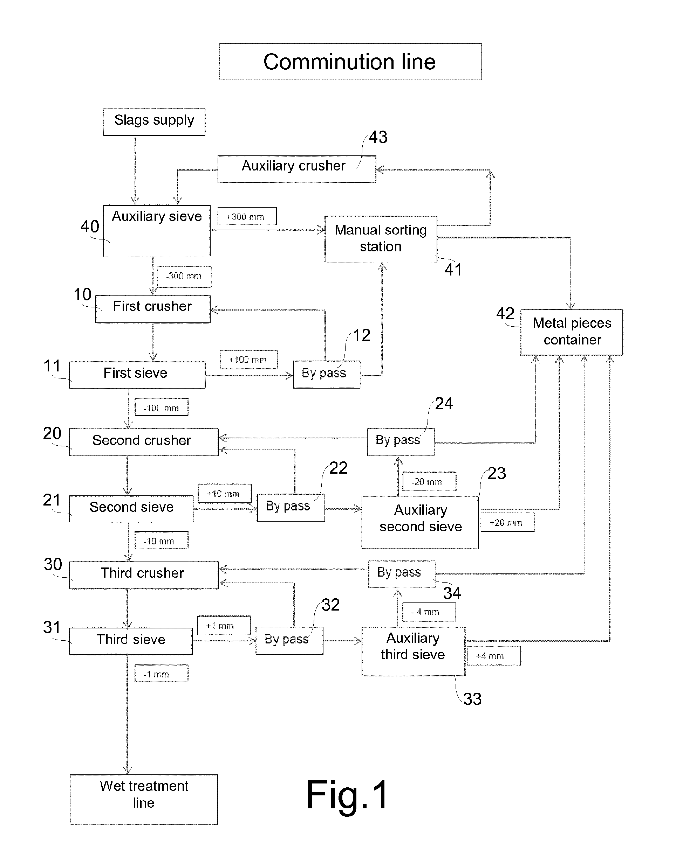

Referring to Figure 1, the steel slags are sent to a first crusher 10, for example a jaw crusher or a double toggle jaw crusher, for a first comminution operation.

The material coming out from the first crusher 10 is received on a first sieve 11 associated therewith and configured to hold elements having a size larger than 100 mm. Oversieve materials, i.e. the set of elements held by way of screening, are recirculated for a number of cycles to the first crusher 10, so as to maximize collection of reusable materials for the purposes of valorization.

Undersieve materials, i.e. the set of materials that pass through the first sieve 11 are fed to a second crusher 20, for example a conical type crusher or an impact crusher, and, subsequently, to a second sieve 21 configured to hold elements having a size larger than 10 mm. Also in this case, oversieve materials are recirculated for a number of cycles to the second crusher 20.

The undersieve materials coming out from the second sieve 21 are fed to a third crusher 30, for example a cylinder crusher, and subsequently to a third sieve 31 configured to hold elements having a size larger than 1 mm. As in the previous cases, oversieve materials are recirculated to the third crusher 30 for a number of cycles. The undersieve materials having a size lower than 1 mm coming out from the comminution line are fed to a subsequent wet treatment step that will be described in detail in the following.

The connections between crushers and sieves along the comminution line, as well as the recirculation paths for oversieve materials can be made by employing conveyor belts.

The valorization method according to the invention preferably comprises a preliminary screening and comminution step whereby steel slags, e.g. fed to the valorization apparatus through a hopper, are in turn fed to an auxiliary sieve 40, for example a star sieve, configured to hold elements having a size larger than 300 mm.

The elements hold by the sieve 40 are preferably fed to a manual sorting station 41. During manual sorting larger metallic pieces that are usually easily recognizable at a glance are separated from the slags and collected in a container 42, while the slags are fed to an auxiliary crusher 43, for example a jaw crusher, where they are subjected to comminution and fed back to the sieve 40.

This preliminary screening and comminution step allows to feed to the first crusher 10 steel slags that are substantially free from large metal pieces that might compromise its operation.

According to an embodiment of the invention, the valorization method includes periodic steps of discharging the elements held by the sieves of the sets of crushers and sieves, which are made to recirculate to the respective comminution units.

The discharging steps allow to eliminate metal pieces from the steel slags to be recovered. Unlike slags, in fact, metal pieces do not undergo appreciable size reductions during comminution operations and would be recirculated endlessly thus, unnecessarily passing through crushers and respective sieves.

In the case of the first crusher and sieve 10, 11, there is for example a discharge or bypass station 12 arranged along the recirculation path between the first sieve 11 and the first crusher 10, from which the elements held by the first sieve11 may be fed to a manual sorting station, which may advantageously be the above mentioned sorting station 41.

Similarly, a discharge or bypass station 22 is associated with the second crusher and sieve 20, 21. The bypass station 22 is arranged along the recirculation path between the second sieve 21 and the second crusher 20, and is configured to receive elements having a size between 10 and 100 mm held by the second sieve 21. According to a preferred embodiment of the invention, such elements may advantageously be sent to an auxiliary second sieve 23, for example configured to hold elements having a size larger than 20 mm. The elements held by the auxiliary second sieve 23, mostly metal elements thanks to the continuous recirculation of the oversieve materials, are fed to the container 42 for the metal pieces, whereas the elements having a lower size are recirculated to the second crusher 20 for further comminution operations.

Between the auxiliary second sieve 23 and the second crusher 20 there may also be advantageously provided a further discharging or bypass station 24. In fact, after an appropriate time and number of recirculation cycles, held elements are metal elements having a size comprised between 10 and 20 mm, whereas all steel slags have passed through the second sieve 21 and fed to the third crusher 30.

Similarly to the second crusher and sieve 20, 21 a discharge or bypass station is associated to the third crusher and sieve 30, 31. The bypass station is arranged along the recirculation path between the sieve 31 and the crusher 30 and is indicated with reference number 32. This bypass station receives elements having a size comprised between 1 and 10 mm held by the third sieve 31. Also in this case, according to a preferred embodiment of the invention, these elements may be sent to an auxiliary third sieve 33, for example configured to hold elements having a size larger than 4 mm. The elements held by the auxiliary third sieve 33, mostly metal elements, are fed to the container 42 for the metal pieces, whereas the elements having a lower size are recirculated to the third crusher 30 for further comminution operations.

Between the auxiliary third sieve 33 and the third crusher 30 there may be also advantageously provided a further discharge or bypass station 34 from which, after a suitable time and number of recirculation cycles, the held elements consisting of metal with a size comprised between 1 and 4 mm are fed to the container 42.

As mentioned above, crushed steel slags having a size lower than 1 mm that come out from the comminution line are subjected to a subsequent wet treatment step.

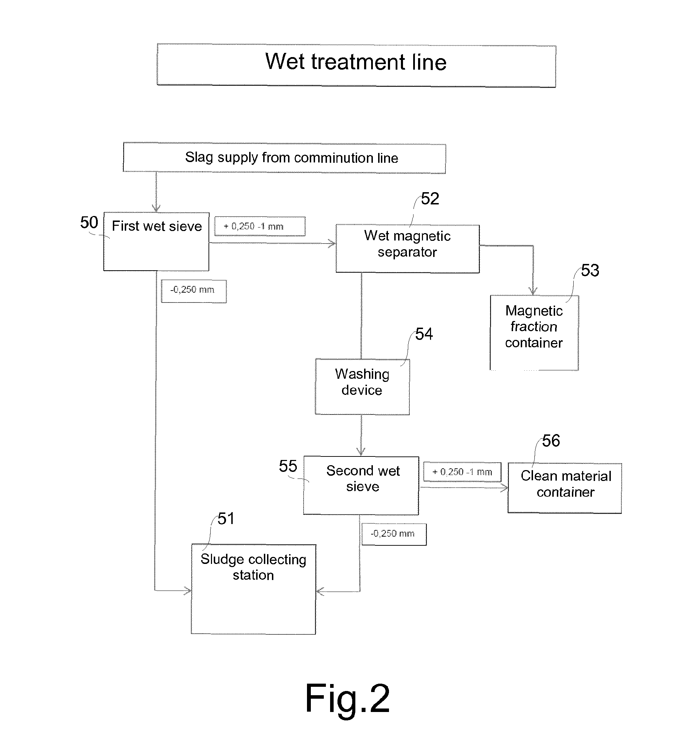

Now referring to Figure 2, the wet treatment comprises a wet screening step carried out with a first wet sieve 50, which has the purpose of separating elements having a size lower than 0.250 mm from the steel slags. These elements form a sludge that is fed to a collecting station 51, wherein known treatments which allow to obtain fine sands, such as decantation, dehydration and the like, may be carried out. These fine sands are also reusable and water recovered may be supplied to the wet treatment line as it will be described later.

Slags having a larger size, in particular comprised between 0.250 and 1 mm, are instead fed to a wet magnetic separator 52, which allows to distinguish and separate magnetic elements, consisting of metal and of materials having a magnetic behavior, from non-magnetic elements, made up of slags that are substantially free from metal inclusions. As explained above, comminution to a particle size lower than 1 mm makes it possible to separate from steel slags substantially the whole amount of undesired metallic inclusions, generally having a spherical shape, while ensuring reasonable costs of the valorization treatment.

The metal fraction, i.e. the whole amount of magnetic elements coming out from the separator 52 is collected in a first tank 53, while the non-metal fraction, which is the whole amount of non-magnetic elements, is fed to a washing device 54, such as a washing sieve or a rotating drum, and subsequently to a second wet sieve 55 for a second wet screening step.

The second sieve 55 is similar to the first sieve 50, i.e. configured to separate elements having a size lower than 0.250 mm collected in the form of sludge in the collection station 51 together with the elements separated by the first sieve and fed together with them to dehydration, decantation processes or the like, which allow to recover fine sands and water.

Non-metallic slags coming out from the second wet sieve 55 are the finished products resulting from the valorization method according to the invention. These products are collected and suitably stored in a second container 56 so as to be used as inert materials.

The connection paths between the different devices and stations of the water treatment line may for example be rubber or PVC pipes, or pipes made of other materials suitable to prevent formation of scale.

According to a further aspect of the invention, the valorization method may advantageously comprise a water clarification treatment, as well as provide for recirculation of process water. The wet treatment step shown in Figure 2 in fact requires rather high amounts of water, for example suitable to achieve a water/solid ratio of 5:1, that are necessary to ensure that the slags recovered as inert materials pass the leaching test according to the present standards, in particular the leaching test with deionized water according to Italian Ministry Decree of April 5th, 2006 n. 186, Annex 3.

Recirculation of process water is very important, because supply of fresh water from the mains or from a natural source would result in excessively high operating costs of the valorization apparatus. In addition to this, discharge of process water in an aquifer would have an unsustainable environmental impact.

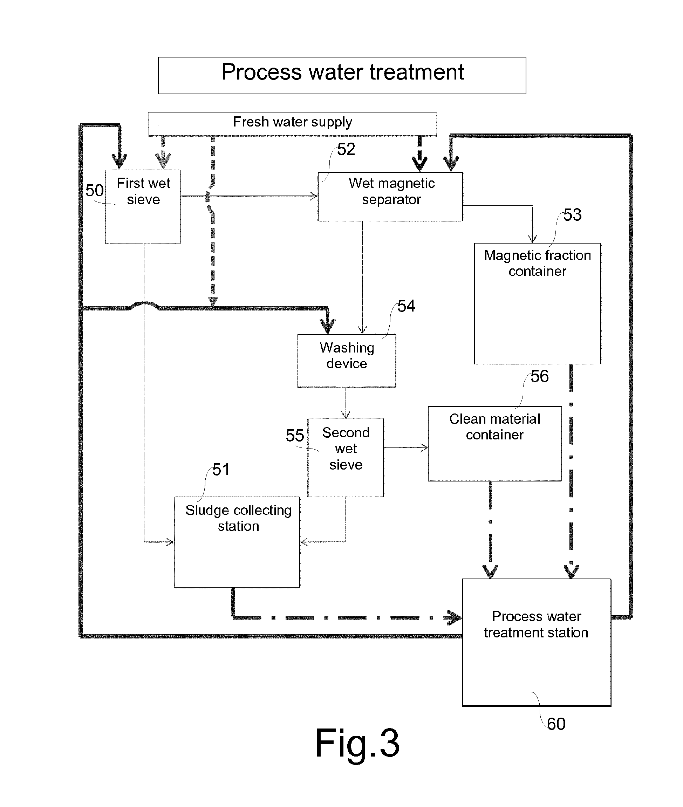

Figure 3 schematically shows the clarification and recirculation treatment of process waters used in the wet treatment step illustrated with reference to Figure 2.

According to the invention, water is recovered by dehydration of the sludge separated from the first and second wet sieves 50, 55, and drainage from the magnetic fraction collected in the container 53, as well as from the clean material collected in the container 56.

The water thus recovered is fed to a treatment station 60, wherein it is clarified and purified from sludge according to known procedures. Hydraulic pipes through which water is collected in the treatment station 60 are schematically shown by way of dash-dot lines.

After the clarification and purification treatment, water is fed by known means from the processing station 60 to the first sieve 50, the wet magnetic separator 52 and the washing device 54. Hydraulic pipes for water supply are schematically shown by way of solid lines having a larger thickness than the lines schematically showing the connection paths between the different devices and stations of the water treatment line.

The first sieve 50, the wet magnetic separator 52 and the washing device 54 may also be fed with fresh water when need arises, in particular in order to compensate for possible apparatus losses and to maintain the desired water/solid ratio constant. Dashed lines schematically show the hydraulic pipes used to supply fresh water.

The invention has been disclosed with reference to preferred embodiments thereof. It will be understood that there may be other embodiments relating to the same inventive idea, as defined by the scope of protection of the claims set forth below.

## Claims

1. A method for the valorization of steel slags, said method comprising the steps of:
i) subjecting steel slags to comminution up to a size lower than 1 mm;
ii) carrying out a first wet screening of the slags subjected to comminution so as to provide oversieve materials having a size comprised between 0.250 and 1 mm;
iii) separating under wet conditions a non-magnetic fraction of said oversieve materials from a magnetic fraction thereof;
iv) washing said non-magnetic fraction;
v) carrying out a second wet screening of said non-magnetic fraction so as to provide oversieve materials having a size comprised between 0.250 and 1 mm;
vi) collecting the washed and screened non-magnetic fraction of the oversieve materials in a container.

2. A method according to claim 1, wherein comminution of the slags comprises a series of crushing and subsequent screening operations carried out with comminution units and respective sieves, and wherein oversieve materials coming out from the sieves are continuously made to recirculate to the respective comminution units.

3. A method according to claim 2, comprising three steps of crushing and subsequent screening, respectively configured to reduce the slags to a particle size lower than 100 mm, 10 mm and 1 mm, respectively.

4. A method according to claim 2 or 3, further comprising a preliminary screening and crushing step configured to reduce the steel slags to a particle size lower than 300 mm before their comminution.

5. A method according to any one of claims 2 to 4, further comprising periodic steps of discharging oversieve materials made to recirculate from the sieves to the respective comminution units.

6. A method according to claim 5, further comprising auxiliary steps of screening and periodic discharging, said auxiliary steps being carried out after each periodic discharging step, wherein said auxiliary screening steps are adapted to hold elements having a particle size larger than the particle size defined by the respective sieves.

7. A method according to any one of claims 1 to 6, further comprising a step of clarification and recirculation of the process water used in the wet treatment operations, said step comprising:
i) recovering process water by dehydration of sludge separated by the first and the second wet screening operations;
ii) recovering process water through drainage of the magnetic and non-magnetic fractions of the oversieve materials separated under wet conditions.

8. An apparatus for the valorization of steel slags, said apparatus comprising:
• a comminution line configured to reduce steel slags to a size lower than 1 mm;
• a first wet sieve (50) configured to provide oversieve materials having a size comprised between 0.250 and 1 mm;
• a wet magnetic separator (52) connected to said first sieve (50) and configured to receive oversieve materials therefrom;
• a first container (53) connected to said magnetic separator (52) and configured to receive a metallic fraction of the oversieve materials therefrom;
• a washing device (54) connected to said magnetic separator (52) and configured to receive a non-metallic fraction of the oversieve materials therefrom;
• a second wet sieve (55) connected to said washing device (54) and configured to receive the non-metallic fraction of the washed oversieve materials therefrom, said second wet sieve being configured to provide oversieve materials having a size comprised between 0,250 and 1 mm;
• a second container (56) connected to said second wet sieve (55) and configured to receive the oversieve materials therefrom.

9. An apparatus according to claim 8, wherein said comminution line comprises a plurality of comminution units and sieves (10, 11, 20, 21, 30, 31) arranged in series, and wherein each set of comminution unit and respective sieve comprises a recirculating path of oversieve materials towards the respective comminution unit.

10. An apparatus according to claim 9, wherein the comminution line comprises three sets of comminution units and sieves (10, 11, 20, 21, 30, 31) arranged in series, and wherein the sieves (11, 21, 31) are configured to separate slags smaller than 100 mm, 10 mm and 1 mm, respectively.

11. An apparatus according to claim 9 or 10, further comprising an auxiliary sieve and an auxiliary comminution unit (40, 43) arranged between an inlet of the apparatus and the comminution line, said auxiliary sieve and comminution unit (40, 43) being configured to reduce the size of the steel slags fed to the comminution line to a particle size smaller than 300 mm.

12. An apparatus according to claim 11, further comprising a manual sorting station (41) connected to said auxiliary sieve (40) so as to receive oversieve materials therefrom, said manual sorting station (41) being also connected to said auxiliary comminution unit (43) so as to feed to the slags free from metal pieces that are separated therefrom by way of manual sorting thereto.

13. An apparatus according to any one of claims 9 o 12, further comprising bypass stations (12, 22, 32) for periodic discharging the oversieve materials made to recirculate between the sieves and the comminution units of each set of comminution units and sieves of the comminution line.

14. An apparatus according to claim 13, further comprising auxiliary sieves and bypass stations (23, 24, 33, 34) associated with each set of comminution units and sieves of the comminution line, and wherein in each set of comminution units and sieves the auxiliary sieves (23, 33) are connected to the bypass stations (22, 32), while the auxiliary bypass stations (24, 34) are connected to said auxiliary sieves (23, 33) so as to receive oversieve materials therefrom, as well as to the comminution units (20, 30) so as to feed oversieve materials toward them.

15. An apparatus according to claim 14, wherein the auxiliary sieves (23, 33) are configured to hold elements having a particle size larger than the particle size of the sieves (21, 31) of the respective sets of comminution units and sieves.

16. An apparatus according to any one of claims 8 to 15, further comprising a treatment station (60) for the clarification and the recirculation of process water, said treatment station (60) being connected to the first and second wet sieves (50, 55) and to the containers (53, 56) for the metallic and non-metallic fractions separated by the magnetic separator (52).
